# EUROPÄISCHE PATENTANMELDUNG

(11) **EP 4 597 932 A1**
(43) Veröffentlichungstag der Anmeldung: **06.08.2025**
(21) Anmeldenummer: 25154793.1
(22) Anmeldetag: 29.01.2025
(51) Int. Cl.: H04L 9/40, H04W 12/00

(54) **VERFAHREN ZUR INTERAKTION VON IOT KNOTEN IN EINEM LOKALEN NETZWERK SOWIE LOKALES IOT KNOTEN-NETZWERK**

(30) Priorität: 31.01.2024 DE 102024102789
(71) Anmelder: Perinet GmbH, 12489 Berlin (DE)
(72) Erfinder: Walther, Karsten, 15711 Königs Wusterhausen (DE)
(74) Vertreter: Eisenführ Speiser

(57) **Zusammenfassung**

Es wird ein Verfahren zur Interaktion von Internet-of-Things loT Knoten (110) in einem lokalen Netzwerk (100) vorgesehen, wobei das lokale Netzwerk (100) ein Ethernet-Netzwerk oder eine Single Pair Ethernet-Netzwerk darstellt und eine Mehrzahl von loT Knoten (110) aufweist, und wobei jeder loT Knoten (110) mindestens einen Sensor und/oder einen Aktor (111) und eine erste Schnittstelle (112) zur Kommunikation mit anderen loT Knoten (110) in dem lokalen Netzwerk (120) aufweist. Das Verfahren umfasst die Schritte: Erstellen einer Gruppe (110a) von loT Knoten (110) aus der Mehrzahl von loT Knoten (110), welche zusammen eine Applikation ausführen, wobei zumindest einer der loT Knoten (110) der Gruppe (110a) jeweils eine Verarbeitungseinheit aufweist, die dazu geeignet ist, zumindest einen Teil einer Anwendungslogik der Applikation auszuführen; Bestimmen eines Gruppenkopf-IoT Knotens (110b) aus den loT Knoten (110) der Gruppe (110a), wobei der Gruppenkopf-IoT Knoten (110b) dazu ausgestaltet ist, die notwendigen Informationen für eine sichere Multicastkommunikation der loT Knoten (110) in der Gruppe(110a) untereinander sicherzustellen, wobei die Multicastkommunikation über ein User Datagram Protocol Internet Protocol UDP/IP erfolgt, und Ausführen der Anwendungslogik zur Durchführung zumindest eines Teils der Applikation über die Verarbeitungseinheiten der loT Knoten (110).

## Beschreibung

Die vorliegende Erfindung betrifft ein Verfahren zur Interaktion von loT Knoten in einem lokalen Netzwerk sowie ein lokales loT Knoten-Netzwerk.

Zur Verbesserung der Automatisierung werden immer mehr Sensoren und Aktoren eingesetzt, welche netzwerkfähig sind. Derartige Netzwerke werden als Internet der Dinge oder Internet of Things loT oder als industrielles Internet der Dinge Industrial Internet of Things IIoT bezeichnet. Eine Kommunikation zwischen den Sensoren und den Aktoren basiert typischerweise auf einem IP Protokoll. Hierbei können diese Sensoren und Aktoren in einem lokalen Netzwerk (Smart Home oder in einer Fabrik) eingesetzt werden. Alternativ dazu können diese loT Sensoren und Aktoren auch unmittelbar mit dem Internet verbunden sein.

Insbesondere bei der Verwendung von loT Sensoren oder Aktoren in einem lokalen Netzwerk muss die Sicherheit der internen Kommunikation gewährleistet sein.

Es ist daher eine Aufgabe der vorliegenden Erfindung, ein verbessertes Verfahren zur Interaktion von loT Knoten in einem lokalen Netzwerk insbesondere mit einer verbesserten Sicherheit zu ermöglichen.

Diese Aufgabe wird durch ein Verfahren zur Interaktion von loT Knoten oder loT Geräten in einem lokalen Netzwerk gemäß Anspruch 1 und durch ein Lokales Internet-of-Things loT Netzwerk nach Anspruch 9 gelöst.

Somit wird ein Verfahren zur Interaktion von loT Knoten in einem lokalen Netzwerk vorgesehen. Das lokale Netzwerk (z.B. ein Local Area Network LAN) stellt ein Ethernet Netzwerk oder ein Single Pair Ethernet Netzwerk dar. Jeder loT Knoten weist mindestens einen Sensor und/oder einen Aktor und eine erste Schnittstelle zur Kommunikation mit anderen loT Knoten in dem lokalen Netzwerk auf. Eine Gruppe von loT Knoten wird aus der Mehrzahl von loT Knoten erstellt, welche zusammen eine Applikation ausführen. Zumindest einer der loT Knoten der Gruppe weist eine Verarbeitungseinheit auf, die dazu geeignet ist, zumindest einen Teil einer Anwendungslogik der Applikation (z.B. Makroblöcke) durchzuführen. Ein Gruppenkopf-IoT Knoten wird während einer Selbstorganisationsphase aus den loT Knoten der Gruppe bestimmt. Der Gruppenkopf-IoT Knoten ist dazu ausgestaltet, den Mitgliedern der Gruppe die notwendigen Informationen für eine sichere Multicastkommunikation bereitzustellen. Die Multicastkommunikation erfolgt dann über ein User Datagram Protocol Internet Protocol UDP/IP. Die Anwendungslogik zur Durchführung zumindest eines Teils der Applikation wird über die Verarbeitungseinheiten der loT Knoten ausgeführt. Damit kann die Anwendungslogik dezentral durch die loT Knoten der Gruppe durchgeführt werden.

Die IoT Knoten der Gruppe gehören zu einer Public-Key-Infrastruktur PKI, welche digitale Zertifikate ausstellen, verteilen und überprüfen kann. Die digitalen Zertifikate werden zur Absicherung der Kommunikation der loT Knoten der Gruppe verwendet.

In einer Selbstorganisationsphase erfolgt das Bestimmen eines Gruppenkopf-loT Knotens über Selbstorganisationsmechanismen unter Nutzung von dezentralen Service Discovery Verfahren und einer sicheren 1-zu-1 Kommunikation basierend auf einem TCP und mTLS Protokoll.

Gemäß einem Aspekt Makroblöcke der loT Knoten über Nachrichten gekoppelt werden, welche über die sichere Multicastkommunikation unter den loT Knoten der Gruppe ausgetauscht werden.

Gemäß einem Aspekt weisen die loT Knoten jeweils eine Verarbeitungseinheit auf, welche dazu geeignet sind einen Teil der Anwendungslogik der Applikation auszuführen. Die Verarbeitungseinheit kann Teil der Schnittstelle und/oder Teil des Sensors/Aktuators sein.

Der Gruppenkopf kann optional dynamisch zur Laufzeit durch die Gruppe ermittelt (Selbstorganisation) werden. In einer Selbstorganisationsphase (d.h. die Bildung der Gruppe) wird mit sicherer Punkt-zu-Punkt Kommunikation (z.B. gemäß dem TCP Protokoll) gearbeitet, wobei sich die zusammengehörigen loT Knoten einer Gruppe über Service Discovery Mechanismen finden.

Die anwendungsbezogene Kommunikation nach der Selbstorganisationsphase erfolgt dann über sichere Multicastkommunikation über User Datagram Protocol Internet Protocol UDP/IP.

Der Kopf der Gruppe kann beispielsweise anhand der vergebenen IP-Adressen der loT Knoten ermittelt werden. Wenn der ausgewählte Knoten bereits Teil einer anderen Gruppe ist und nicht den Kopf darstellt, dann kann dieser loT Knoten die Informationen zur anderen Multicastgruppe weitergeben.

Der Kopf der Gruppe kann folgende Informationen an die weiteren Mitglieder der Gruppe ausgeben: ein synchroner Schlüssel, eine Multicast Adresse und Zeitinformationen. Mittels der Zeitinformationen können die anderen Knoten der Gruppe sich ebenfalls auf eine Zeitbasis einstellen. Mittels der Zeitinformationen kann auch festgestellt werden, ob es sich bei einer empfangenen Nachricht oder einem empfangenen Paket um eine aktuelle Nachricht oder ein aktuelles Paket handelt.

Die Bildung einer Gruppe kann in einer Selbstorganisationsphase zweiphasig erfolgen. In der ersten Phase werden den loT Knoten in dem Netzwerk Zertifikate zugeordnet und es kann ein Austausch von Schlüsseln erfolgen. In der zweiten Phase können die loT-Knoten zu einer Gruppe zusammengestellt werden, um eine Anwendung ausführen zu können. Es kann ein selbst-konfigurierendes Netzwerk (Self-X) darstellen.

In der ersten Phase (zur Bildung der Gruppe) erfolgt die Kommunikation über TCP (Transmission Control Protocol) und mTLS (mutual Transport Layer Security). Eine Kommunikation innerhalb der Gruppe nach der Selbstorganisationsphase kann als Multicastkommunikation über ein User Datagram Protocol Internet Protocol UDP/IP erfolgen.

Ein IoT Knoten kann einen Speicher mit einer Speicherkapazität von <1Mbyte, insbesondere von zwischen 150 und 500 kByte aufweisen. Der loT Knoten weist damit nur eine geringe Speicherkapazität auf.

Anstatt eines zentralen Computers zur Steuerung der Applikation wird die Applikation durch die IoT Knoten dezentral umgesetzt. Der Grundgedanke dabei ist, dass loT Knoten ihrer Natur gemäß (kommunikationsfähig) die notwendige Rechenleistung für die Umsetzung typischer Anwendungen besitzen und damit eine Zentralverarbeitungsinstanz z.B. eine SPS entfallen kann.

Die Applikation wird daher nicht zentral sondern dezentral umgesetzt, wobei die Anwendungslogik auf verteilte Verarbeitungseinheiten z.B. Funktionsblöcke, oder Makro, aufgeteilt wird, wodurch die bisher übliche Zentralsteuerung überflüssig wird. Beispielsweise als Reaktion auf äußere Umstände oder durch eine Betätigung eines Betätigungselementes sendet ein loT Knoten (beispielsweise ein Taster) eine Nachricht über den Multicast Kanal. Dieser loT Knoten kann Makrooperationen durchführen und kann anhand der Umgebungseinflüsse oder der Betätigung des Elementes eine Nachricht erzeugen, welche im Multicast an die Mitglieder der Gruppe gesendet wird. Die empfangenden loT Knoten weisen typischerweise ebenfalls Makrooperationen auf. Hier kann dann anhand der empfangenen Nachricht eine entsprechende Steuerung des loT Knotens erfolgen.

Die jeweiligen loT Knoten können durch einen Benutzer konfiguriert werden, so dass eine Nachricht eine Makrofunktion initialisiert.

Eine Anwendungslogik zum Durchführen einer Applikation kann optional dezentral auf den loT Knoten selbst durch sogenannte Makroblöcke umgesetzt werden. Sensoren können z.B. bestimmte durch den Nutzer zu definierende Nachrichten bei Vorliegen von Ereignissen senden. Aktuatoren können auf solche Nachrichten festgelegte Aktionen ausführen. Es ist durch die Multicastkommunikation insbesondere möglich, dass eine sogenannte n-zu-m Interaktion stattfindet, d.h. ein Sensor steuert mehrere Aktuatoren und ein Aktuator kann durch mehrere Sensoren gesteuert werden. Optional kann ein loT Knoten als Multi-Sensor-Aktor ausgestaltet sein.

Optional können alle loT Knoten der Gruppe eine gemeinsame Zeitbasis aufweisen. Der Gruppenkopf-IoT Knoten bestimmt während der Selbstorganisationsphase die gemeinsam genutzte Zeitbasis. IoT Knoten können die aktuelle Zeit in die gesendeten Nachrichten einfügen, wodurch sich die auf der Leitung übertragene Bitsequenz sich automatisch mit der Zeit ändert. Hiermit kann ein Angreifer nicht die Nachricht, z.B. zum Öffnen einer Tür, später einfach nochmal senden bzw. dies wird durch die empfangenen Knoten als Angriff erkannt. Besonders vorteilhaft ist durch die Verwendung einer Zeitbasis, dass jeder Knoten die Zeit selbstständig aktualisieren kann.

Ein-IoT Knoten kann dazu ausgestaltet sein, eine zu sendende Nachricht zu signieren. Die empfangenen loT Knoten sind dazu ausgestaltet sind, die Nachricht anhand der enthaltenen Signatur den Ursprung zu überprüfen.

Die erste Schnittstelle des loT Knotens kann Display-los und Bedienungselemente-frei ausgestaltet sein.

Gemäß einem Beispiel ist mindestens einer der loT Knoten ein dynamischer loT Knoten, der zumindest zeitweilig Teil des Netzwerkes (120) ist. Der dynamische loT Knoten ist von der Auswahl als Gruppenkopf-IoT Knoten ausgenommen.

Jeder loT Knoten oder jedes loT Gerät kann sich mittels eines asymmetrischen Verschlüsselungsverfahren den anderen loT Knoten einer Kommunikationsgruppe gegenüber authentifizieren. Der Bereitstellung der dafür notwendigen Schlüsselpaare und Zertifikate z.B. in WO 2021/0644096 beschrieben. Ein solches kryptografisches Verfahren erlaubt den sicheren autonomen Verbindungsaufbau von loT Knoten.

Die Sensoren können z.B. als Bedienelemente, Taster, Drehregler, Schwellwertschalter z.B. Füllstand, Bewegung, Umgebungssensoren, Temperatursensor, Feuchtigkeitssensor, CO2sensor, Lichtsensor, Windsensor, Vibrationssensor, und/oder Stromsensorik ausgestaltet sein.

Die Aktoren können z.B. als Leuchten, Jalousien, Ventile, Mischer, Pumpen, Stellantriebe, Türöffner/-schließer und/oder Heiz-/Kühlelement ausgestaltet sein.

Die Kommunikation kann als netzwerkbasierte Kommunikation über UDP/IP oder TCP/IP erfolgen.

Die IoT Knoten können in lokalen Netzen ohne Routing untereinander verwendet werden
Die IoT Knoten besitzen nur für die Funktion notwendige Bedienelemente (keine Displays und Tasten zur Konfiguration).

Es handelt sich bei den IoT Knoten um tief eingebettete Systeme (Systeme mit wenig Rechnerleistung und Speicher im Vergleich zu üblichen Rechnern (Laptops, Mobiltelefone).

Die IoT Knoten sind optional batterielos.

Die Interaktion der loT Knoten kann dezentral erfolgen.

Weitere Ausgestaltungen der Erfindung sind Gegenstand der Unteransprüche.

Vorteile und Ausführungsbeispiele der Erfindung werden nachstehend unter Bezugnahme auf die Zeichnung näher erläutert.
- Fig. 1: zeigt eine schematische Darstellung eines lokalen Netzwerkes, und
- Fig. 2: zeigt eine vergrößerte Ansicht eines Teils des lokalen Netzwerkes von Fig. 1.

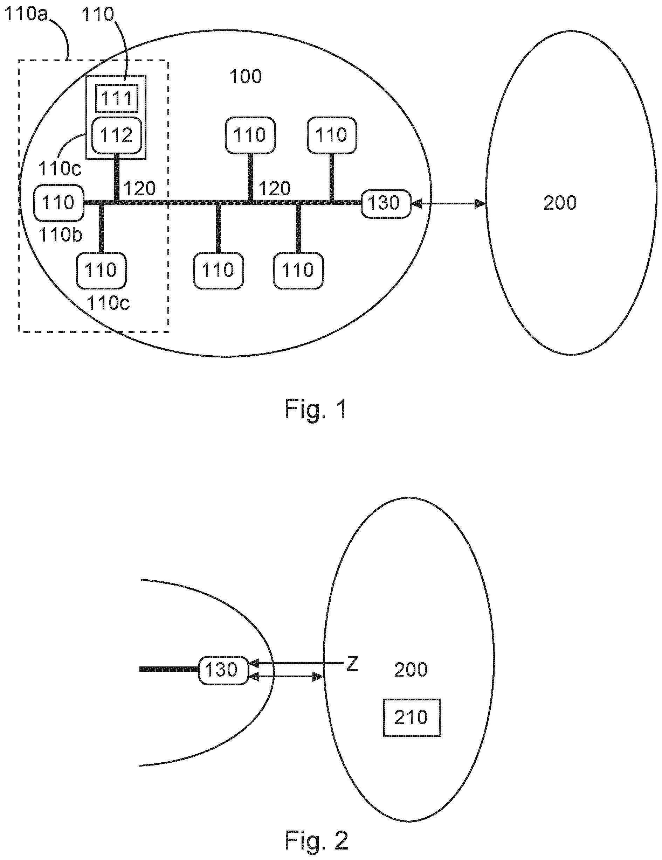

Fig. 1 zeigt eine schematische Darstellung eines lokalen Netzwerkes gemäß einem ersten Ausführungsbeispiel der Erfindung und Fig. 2 zeigt eine vergrößerte Ansicht eines Teils des lokalen Netzwerkes von Fig. 1. Ein lokales Netzwerk 100 weist eine Mehrzahl von loT (Internet of Things) Knoten 110 auf, welche durch ein Ethernet-Netzwerk oder ein Single Pair Ethernet-Netzwerk 120 miteinander verbunden sind. Die loT Knoten 110 können lediglich innerhalb des lokalen Netzwerkes 100 mit anderen loT Knoten 110 kommunizieren. Jeder Knoten 110 kann einen Sensor und/oder einen Aktor 111 und eine Schnittstelle 112 zur Kommunikation mit anderen loT Knoten 110 in dem Netzwerk 100 aufweisen.

Um eine Applikation umzusetzen, wird aus den dazu benötigten loT Knoten 110 eine Gruppe 110a gebildet. Der Austausch von Gruppeninformationen (Zeitbasis, Multicast-Adresse, und/oder Verschlüsselungsinformationen) kann basierend auf einer per mTLS gesicherten TCP/IP Verbindung erfolgen. Die Kommunikation zwischen den loT Knoten 110 der Gruppe 100a in dem Netzwerk 100 erfolgt anschließend basierend auf einem User Datagram Protocol Internet Protocol UDP/IP, welche über symmetrische Verschlüsselung abgesichert wird. Einer der loT Knoten der Gruppe 100a stellt einen Gruppenkopf 110b dar, er stellt die notwendigen Informationen für die abgesicherte Multicastkommunikation für die anderen Knoten zur Verfügung, (z.B. die zu nutzende Multicastadresse, der zu nutzende symmetrische Verbindungsschlüssel und optional die zu nutzende gemeinsame Zeitbasis). Die Applikationslogik kann auf einer Verarbeitung von Makroblocks basieren. Damit kann eine dezentrale Steuerung der Applikation durch die loT Knoten selbst erreicht werden.

Typische Sensoren sind z.B. Bedienelemente, Taster, Drehregler, Schwellwertschalter z.B. Füllstand, Bewegung, Umgebungssensoren Temperatur, Feuchtigkeit, CO2, Licht, Wind, Vibration, und Stromsensorik.

Typische Aktoren sind z.B. Leuchten, Jalousien, Ventile, Mischer, Pumpen, Stellantriebe, Türöffner/-schließer und Heiz-/Kühlelemente.

Als Schutz gegen Replayattacken kann die UDP/IP Kommunikation eine gemeinsame Zeitbasis verwenden. Da die Daten verschlüsselt übertragen werden, kann hierdurch ein Angreifer später nicht noch einmal eine gültige Nachricht wiederholt senden und somit unerwünscht Aktionen auslösen.

Somit kann auch eine automatisierte Maschine-zu-Maschine Kommunikation auch in lokalen Netzwerken mit einer sehr hohen Anzahl von loT Knoten 110 ermöglicht werden.

Gemäß dem ersten Ausführungsbeispiel soll eine automatische Möglichkeit der Authentifizierung der loT Knoten 110 innerhalb des lokalen Netzwerkes 100 ermöglicht werden, ohne dass hierbei eine kontinuierliche aktive Internetverbindung beispielsweise zu einem Root-Zertifikat-Server 210 vorhanden sein muss. Dies wird erreicht, indem alle Sicherheitsmechanismen in das lokale Netz verlegt werden, ohne dass bei der Authentifizierung eine aktive Internetverbindung vorhanden sein muss.

Die IoT Knoten oder loT Geräte stellen Geräte dar, die Display-los und Bedienungselemente-frei ausgestaltet sind. Damit können die Kosten für die loT Knoten oder loT Geräte reduziert werden. Eine Ansteuerung der loT Knoten oder loT Geräte kann nur über das lokale Netzwerk erfolgen. Beispielsweise kann eine Einstellung von Parametern über einen Browser auf dem Computer 130 erfolgen.

Der IoT Knoten gemäß der Erfindung weist weder ein Display noch Bedienelemente noch einen Reset Knopf auf. Der loT Knoten weist lediglich eine erste Schnittstelle zur Kommunikation mit dem Netzwerk 120 auf. Eine zweite Schnittstelle kann zur Kommunikation mit Geräten verwendet werden, welche an den loT Knoten 110 gekoppelt sind.

Gemäß einem Aspekt der vorliegenden Erfindung können die loT Knoten netzwerkfähige Smart-Home Geräte, Geräte einer Gebäudeautomatisierung oder Industriegeräte darstellen.

Während der Initialisierung der Multicast Gruppe kann eine Public Key Infrastructure PKI verwendet werden. Anhand eines Service Discovery wie z.B. in WO 2021/0644096 beschrieben, können diejenigen loT Knoten bestimmt werden, welche Teil der Gruppe sein sollen. Während der Initialisierung der Multicast Gruppe wird einer der loT Knoten als Gruppenkopf ausgewählt. Der Gruppenkopf dient dazu, allen Knoten der Gruppe die für eine sichere Multicastkommunikation notwendigen Informationen (symmetrischer Schlüssel, Multicast Adresse und Zeitinfo) auszugeben.

Gemäß einem Beispiel wird ein Verfahren zur Interaktion von Internet-of-Things loT Knoten (110) in einem lokalen Netzwerk (100) vorgesehen, wobei das lokale Netzwerk (100) ein Ethernet-Netzwerk oder eine Single Pair Ethernet-Netzwerk darstellt und eine Mehrzahl von loT Knoten (110) aufweist, und wobei jeder loT Knoten (110) mindestens einen Sensor und/oder einen Aktor (111) und eine erste Schnittstelle (112) zur Kommunikation mit anderen loT Knoten (110) in dem lokalen Netzwerk (120) aufweist. Das Verfahren umfasst die Schritte:
- Erstellen einer Gruppe (110a) von loT Knoten (110) aus der Mehrzahl von loT Knoten (110), welche zusammen eine Applikation ausführen, wobei alle Knoten zu einer gemeinsamen Publik-Key-Infrastruktur PKI gehören,
- Bestimmen eines Gruppenkopf-IoT Knotens (110b) aus den loT Knoten (110) der Gruppe (110a) über Selbstorganisationsmechanismen unter Nutzung von dezentralen Dienstfindungsverfahren und sicherer 1-zu-1 Kommunikation,
   wobei der Gruppenkopf-IoT Knoten (110b) dazu ausgestaltet ist, die notwendigen Informationen für eine sichere Multicastkommunikation der loT Knoten (110) in der Gruppe(110a) untereinander über ein User Datagram Protocol Internet Protocol UDP/IP sicherzustellen,
- Ausführen der Anwendungslogik über auf den loT Knoten ausführbarer Makroblöcke, welche über Nachrichten gekoppelt werden, welche über die sichere Multicastkommunikation ausgetauscht werden.

## Patentansprüche

1. Verfahren zur Interaktion von Internet-of-Things loT Knoten (110) in einem lokalen Netzwerk (100), wobei das lokale Netzwerk (100) ein Ethernet-Netzwerk oder eine Single Pair Ethernet-Netzwerk darstellt und eine Mehrzahl von loT Knoten (110) aufweist, und wobei jeder loT Knoten (110) mindestens einen Sensor und/oder einen Aktor (111) und eine erste Schnittstelle (112) zur Kommunikation mit anderen loT Knoten (110) in dem lokalen Netzwerk (120) aufweist, mit den Schritten:
- Erstellen einer Gruppe (110a) von loT Knoten (110) aus der Mehrzahl von loT Knoten (110), welche zusammen die Applikation ausführen,
wobei zumindest einer der loT Knoten (110) der Gruppe (110a) jeweils eine Verarbeitungseinheit aufweist, die dazu geeignet ist, zumindest einen Teil einer Anwendungslogik der Applikation auszuführen,
- Bestimmen eines Gruppenkopf-IoT Knotens (110b) aus den loT Knoten (110) der Gruppe (110a),
wobei der Gruppenkopf-IoT Knoten (110b) dazu ausgestaltet ist, die notwendigen Informationen für eine sichere Multicastkommunikation der loT Knoten (110) in der Gruppe(110a) untereinander sicherzustellen,
wobei die Multicastkommunikation in der Gruppe über ein User Datagram Protocol Internet Protocol UDP/IP erfolgt, und
- Ausführen der Anwendungslogik zur Durchführung zumindest eines Teils der Applikation über die Verarbeitungseinheiten der loT Knoten (110),
wobei zumindest alle loT Knoten (110) der Gruppe (110a) zu einer gemeinsamen Public-Key Infrastruktur gehören, welche digitale Zertifikate ausstellen, verteilen und überprüfen kann, die zur Absicherung der Kommunikation der loT Knoten (110) der Gruppe (110a) verwendet werden,
wobei in einer Selbstorganisationsphase, das Bestimmen eines Gruppenkopf-IoT Knotens (110b) über Selbstorganisationsmechanismen unter Nutzung von dezentralen Service Discovery Verfahren und einer sicheren 1-zu-1 Kommunikation basierend auf einem TCP (Transmission Control Protocol) und mTLS (mutual Transport Layer Security) Protokoll erfolgt,
wobei die loT Knoten (110b) dazu ausgestaltet sind, eine zu sendende Nachricht zu signieren,
wobei die empfangenen loT Knoten (110) dazu ausgestaltet sind, den Ursprung der Nachricht anhand der enthaltenen Signatur zu überprüfen.

2. Verfahren zur Interaktion von loT Knoten (110) in einem lokalen Netzwerk (100) nach Anspruch 1, wobei
ein Ausführen der Anwendungslogik, insbesondere Makroblöcke, durch die Verarbeitungseinheiten der loT Knoten über Nachrichten gekoppelt werden, welche über die sichere Multicastkommunikation unter den loT Knoten (110) der Gruppe (110a) ausgetauscht werden.

3. Verfahren zur Interaktion von loT Knoten (110) in einem lokalen Netzwerk (100) nach einem der Ansprüche 1 bis 2, wobei
alle loT Knoten (110) der Gruppe (100a) eine gemeinsame Zeitbasis aufweisen,
wobei die loT Knoten (110) die Zeitbasis in die von ihn gesendeten Nachrichten einbetten und empfangende loT Knoten die Aktualität der Nachrichten anhand der darin enthaltenen Zeitbasis überprüfen können.

4. Verfahren zur Interaktion von loT Knoten (110) in einem lokalen Netzwerk (100) nach Anspruch 1, wobei
die IoT Knoten (110) die Zeitbasis selbstständig aktualisieren können.

5. Verfahren zur Interaktion von Internet-of-Things loT Knoten (110) in einem lokalen Netzwerk (100) nach einem der Ansprüche 1 bis 4, wobei
die empfangenen loT Knoten (110) dazu ausgestaltet sind, anhand der enthaltenen Signatur unterschiedliche Rechte innerhalb der Anwendung umzusetzen.

6. Verfahren zur Interaktion von Internet-of-Things loT Knoten (110) in einem lokalen Netzwerk (100) nach einem der vorherigen Ansprüche, wobei
die erste Schnittstelle (112) der loT Knoten (110) Display-los und Bedienungselemente-frei ausgestaltet ist.

7. Verfahren zur Interaktion von Internet-of-Things loT Knoten (110) in einem lokalen Netzwerk (100) nach einem der vorherigen Ansprüche, wobei
jeder loT Knoten (110) einen ersten öffentlichen kryptographischen Schlüssel und einen ersten privaten kryptographischen Schlüssel aufweist, wobei der erste private Schlüssel vorab abgelegt oder von dem loT Knoten (110) selber erzeugt wird.

8. Verfahren zur Interaktion von Internet-of-Things loT Knoten (110) in einem lokalen Netzwerk (100) nach einem der vorherigen Ansprüche, wobei
die notwendigen Informationen für eine sichere Multicastkommunikation der loT Knoten (110) eine Multicastadresse, ein symmetrischer Schlüssel und eine gemeinsame Zeitbasis enthalten.

9. Verfahren zur Interaktion von Internet-of-Things loT Knoten (110) in einem lokalen Netzwerk (100) nach einem der vorherigen Ansprüche, wobei
die Multicastkommunikation der loT Knoten innerhalb der Gruppe eine n-m Kommunikation darstellt.

10. Lokales loT-Knoten-Netzwerk (100), wobei das lokale Netzwerk (100) ein Ethernet-Netzwerk oder eine Single Pair Ethernet-Netzwerk darstellt, mit
einer Mehrzahl von loT Knoten (110), wobei jeder loT Knoten (110) mindestens einen Sensor und/oder einen Aktor (111) und eine erste Schnittstelle (112) zur Kommunikation mit anderen loT Knoten (110) in dem lokalen Netzwerk (120) aufweist,
wobei eine Gruppe (110a) von loT Knoten (110) aus der Mehrzahl von loT Knoten (110) dazu ausgestaltet ist, zusammen eine Applikation ausführen,
wobei ein Gruppenkopf-IoT Knoten (110b) aus der Gruppe von loT Knoten (110a) dazu ausgestaltet ist, die notwendigen Informationen für eine sichere Multicastkommunikation der loT Knoten (110) in der Gruppe (110a) untereinander über ein User Datagram Protocol Internet Protocol UDP/IP sicherzustellen,
wobei zumindest einer der loT Knoten (110) der Gruppe (110a) jeweils eine Verarbeitungseinheit aufweist, die dazu geeignet ist, zumindest einen Teil einer Anwendungslogik der Applikation auszuführen,
wobei zumindest alle loT Knoten (110) der Gruppe (110a) zu einer gemeinsamen Public-Key Infrastruktur gehören, welche digitale Zertifikate ausstellen, verteilen und überprüfen kann, die zur Absicherung der Kommunikation der loT Knoten (110) der Gruppe (110a) verwendet werden,
wobei in einer Selbstorganisationsphase das Bestimmen eines Gruppenkopf-IoT Knotens (110b) über Selbstorganisationsmechanismen unter Nutzung von dezentralen Service Discovery Verfahren und einer sicheren 1-zu-1 Kommunikation basierend auf einem TCP (Transmission Control Protocol) und mTLS (mutual Transport Layer Security) Protokoll erfolgt,
wobei die loT Knoten (110b) dazu ausgestaltet sind, eine zu sendende Nachricht zu signieren,
wobei die empfangenen loT Knoten (110) dazu ausgestaltet sind, den Ursprung der Nachricht anhand der enthaltenen Signatur zu überprüfen.
